# EUROPEAN PATENT SPECIFICATION

(11) **EP 4 509 982 B1**
(45) Date of publication and mention of the grant of the patent: **26.08.2026**
(21) Application number: 23934899.8
(22) Date of filing: 25.09.2023
(51) Int. Cl.: G06F 9/4401, G06F 9/445, G06F 9/451, B60R 16/023, B60K 35/22

(54) **VEHICLE-MOUNTED INSTRUMENT INTERFACE DISPLAY METHOD AND SYSTEM, ELECTRONIC DEVICE, AND STORAGE MEDIUM**
VERFAHREN UND SYSTEM ZUR ANZEIGE EINER FAHRZEUGMONTIERTEN INSTRUMENTENSCHNITTSTELLE, ELEKTRONISCHE VORRICHTUNG UND SPEICHERMEDIUM
PROCÉDÉ ET SYSTÈME D'AFFICHAGE D'INTERFACE D'INSTRUMENT EMBARQUÉ, DISPOSITIF ÉLECTRONIQUE ET SUPPORT DE STOCKAGE

(30) Priority: 28.04.2023 CN 202310476019
(43) Date of publication of application: 19.02.2025
(73) Proprietor: ECARX TECHNOLOGY PTE. LTD., Singapore 048580 (SG)
(72) Inventor: FANG, Hongfeng, Wuhan, Hubei 430056 (CN)
(74) Representative: Santarelli
(86) International application number: PCT/CN2023/121125
(87) International publication number: WO 2024/221730

(56) References cited:
- CN-A- 112 297 841
- CN-A- 112 644 276
- CN-A- 113 326 070
- CN-A- 113 342 412
- CN-A- 115 686 715
- CN-A- 116 176 461
- JP-A- 2008 287 317
- US-A1- 2021 253 045
- US-A1- 2022 083 346
- US-B2- 10 891 921

## Description

### TECHNICAL FIELD

The present invention relates to the technical field of vehicles and, in particular, to a displaying method and system for an in-vehicle meter interface, an electronic device, and a storage medium.

### BACKGROUND

As a means of transportation, vehicles are gradually moving towards upscale, low-carbon and intelligent directions. At present, it has been a mainstream solution to use liquid crystal meters in intelligent cockpits. Display of images of the liquid crystal meters on the market is implemented based on a single operating system or a virtualization system. Generally, system startup requires functions such as a virtual machine hypervisor -> a bootloader-> a kernel startup-> an interface application (App), etc., which involve initialization of drivers of a plurality of modules before they can be displayed normally, such as a controller driver, a data processing unit (DPU) driver and a memory management unit (MMU) driver, etc. In addition, in some existing solutions, in order to improve a startup speed of the meters, only a startup animation is put into the bootloader for display, which cannot feedback real vehicle body data. If the kernel startup and the interface application are abnormal, the vehicle body data cannot be displayed normally.

CN 112644276 A discloses a screen display method, a vehicle and a computer storage medium. The screen management method is applied to the vehicle comprising a display screen integrated with an instrument image display area and a central control image display area, and a first operating system used for managing instrument information and a second operating system used for managing central control information, and comprises the following steps: receiving a starting instruction, and starting the first operating system and the second operating system, wherein the starting completion time of the first operating system is shorter than the starting completion time of the second operating system; and after determining that the first operating system is started, displaying an instrument image generated by the first operating system in the instrument image display area and the central control image display area of the display screen. According to the screen display method, the vehicle and the computer storage medium provided by the invention, the situation that the display screen is partially black due to the starting time difference of different operating systems can be avoided, and the user experience is effectively improved.

US 10891921 B2 discloses systems and methods for outputting to a vehicle dashboard screen from multiple operating systems. The systems and methods use a computing device to host different types of applications in the operating systems. A first of the operating systems runs driving-critical applications, and a second of the operating systems can run non-driving-critical applications. The first operating system has direct access to display hardware on the computing device, and can include security features to prevent it from being compromised. Outputs generated by the non-driving-critical applications in the second operating system are sent to the first operating system, where the outputs are combined with outputs from the driving-critical applications, to create a series of composite images for display on the dashboard screen. Either the first operating system or the second operating system can control the whole dashboard screen based on predetermined configurations.

### SUMMARY

In view of the above-described problems, a displaying method and system for an in-vehicle meter interface, an electronic device and a storage medium are proposed. The invention is set out in the appended set of claims.

One object of the present invention to improve a display speed of the in-vehicle meter interface.

According to one aspect of the present invention, the present invention provides a displaying method for an in-vehicle meter interface, applied to a heterogeneous system on chip which includes at least two heterogeneous kernels running a first system and a second system, respectively. The displaying method includes:
activating the first system and the second system;
importing startup animation data of an in-vehicle meter into a memory of the first system;
inputting the startup animation data in the memory of the first system into an image synthesis controller in the first system;
determining whether the first system receives startup animation data from the second system;
if not, merging vehicle body data and the startup animation data of the first system through the image synthesis controller to obtain merged data, and inputting it to a display controller of the first system; and
displaying the merged data on the in-vehicle meter interface through the display controller;
where a startup duration of the first system is shorter than that of the second system.

Optionally, if the first system receives the startup animation data from the second system, the displaying method further includes:
merging the startup animation data of the second system and the vehicle body data through the image synthesis controller to obtain merged data, and inputting the merged data into the display controller of the first system; and
stopping inputting the startup animation data in the memory of the first system into the image synthesis controller in the first system.

Optionally, the importing the startup animation data of the in-vehicle meter into the memory of the first system, including:
importing the startup animation data stored in a universal flash storage into the memory of the first system.

Optionally, the inputting the startup animation data in the memory of the first system into the image synthesis controller in the first system, including:
decoding the startup animation data into animation data in a specified format through a video processing unit, and inputting the animation data in the specified format into the image synthesis controller in the first system.

Optionally, the second system is activated through the following methods:
activating a bootloader in the second system;
initializing a graphics processing unit in the second system through the bootloader;
displaying a first frame of meter image of the in-vehicle meter interface through the graphics processing unit in the second system; and
sending the startup animation data to the first system.

Optionally, the first system is a functional safety operating system; and
the second system is a Linux operating system.

According to another aspect of the present invention, the present invention further provides a displaying system for an in-vehicle meter interface, including a heterogeneous system on chip which includes at least two heterogeneous kernels running a first system and a second system, respectively, where
the first system is configured to:
import startup animation data of an in-vehicle meter into a memory of the first system;
input the startup animation data in the memory of the first system into an image synthesis controller in the first system;
determine whether the first system receives startup animation data from the second system;
if not, merge vehicle body data and the startup animation data of the first system through the image synthesis controller to obtain merged data, and input it to a display controller of the first system; and
display the merged data on the in-vehicle meter interface through the display controller;
where a startup duration of the first system is shorter than that of the second system.

Optionally, the first system is configured to merge the startup animation data of the second system and the vehicle body data through the image synthesis controller to obtain merged data if it receives the startup animation data from the second system, and input the merged data into the display controller of the first system; and
stop inputting the startup animation data in the memory of the first system into the image synthesis controller in the first system.

According to still another aspect of the present invention, the present invention further provides an electronic device, including a memory and a processor, where the memory stores a control program which, when executed by the processor, is used to implement the displaying method for an in-vehicle meter interface according to any one of the above-described aspects.

According to yet another aspect of the present invention, the present invention further provides a machine-readable storage medium, storing a machine-executable program thereon which, when executed by a processor, implements the displaying method for an in-vehicle meter interface according to any one of the above-described aspects.

In the displaying method for an in-vehicle meter interface according to the present invention, the first system and the second system are activated, and the startup animation data of the in-vehicle meter is imported into the memory of the first system, the startup animation data in the memory of the first system is input into the image synthesis controller in the first system, and it determines whether the first system receives the startup animation data from the second system, if not, the vehicle body data and the startup animation data of the first system are merged through the image synthesis controller to obtain the merged data, and the merged data is input into the display controller of the first system, and is displayed on the in-vehicle meter interface through the display controller. This embodiment does not adopt the solution that is based on the virtual machine hypervisor-> the bootloader -> the kernel startup-> the interface application (App), the display speed of the in-vehicle meter interface is significantly improved, so that the in-vehicle meter interface can be normally displayed within 1 second, for example, within 300-500 milliseconds, and the vehicle body data of the vehicle where the meter is located can be truly and completely displayed, thereby improving the user experience.

The above and other objects, advantages and features of the present invention will become more apparent to those skilled in the art from the following detailed description of the specific embodiments of the present invention in conjunction with the accompanying drawings.

### BRIEF DESCRIPTION OF THE DRAWINGS

Various other advantages and benefits will become apparent to those of ordinary skill in the art upon reading the following detailed description of the preferred implementations. The accompanying drawings are only used for illustrating the preferred implementations and are not to be considered as limiting the present invention, and the same reference symbols are used to represent the same components throughout the accompanying drawings.
FIG. 1 is a flowchart of a displaying method for an in-vehicle meter interface according to an embodiment of the present invention.
FIG. 2 is a flowchart of a displaying method for an in-vehicle meter interface according to another embodiment of the present invention.
FIG. 3 is a schematic block diagram of a display system according to an embodiment of the present invention.
FIG. 4 is a schematic block diagram of an electronic device according to an embodiment of the present invention.

### DESCRIPTION OF EMBODIMENTS

Exemplary embodiments of the present disclosure will be described below in more detail with reference to the accompanying drawings. Although the exemplary embodiments of the present disclosure have been shown in the accompanying drawings, it should be understood that the present disclosure may be implemented in various forms and should not be limited to the embodiments described herein. On the contrary, these embodiments are provided to enable a more thorough understanding of the present disclosure and to fully convey the scope of the present disclosure to those skilled in the art.

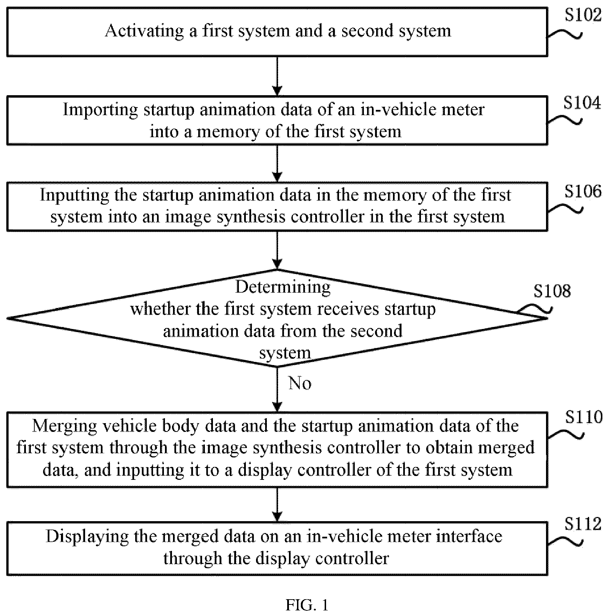

FIG. 1 is a flowchart of a displaying method for an in-vehicle meter interface according to an embodiment of the present invention. The displaying method may be applied to a heterogeneous system on chip (SoC), and the heterogeneous system on chip may include at least two heterogeneous kernels running a first system and a second system, respectively. Referring to FIG. 1, the displaying method may include the following steps.

Step S102: activating a first system and a second system. In this step, when the first system and the second system are activated, some controllers inside the first system and the second system may be initialized, such as an image synthesis controller, a display controller, a video processing unit, etc.

Step S104: importing startup animation data of an in-vehicle meter into a memory of the first system. The type of the memory may be a double data rate (DDR) synchronous dynamic random access memory.

Step S106: inputting the startup animation data in the memory of the first system into an image synthesis controller in the first system.

Step S108: determining whether the first system receives startup animation data from the second system.

If not, proceeding to step S110: merging vehicle body data and the startup animation data of the first system through the image synthesis controller to obtain merged data, and inputting it to a display controller of the first system. The vehicle body data may include fuel quantity data and alarm data, etc. The vehicle body data may be obtained through corresponding sensors.

Step S112: displaying the merged data on the in-vehicle meter interface through the display controller, where a startup duration of the first system is shorter than that of the second system.

In the displaying method for an in-vehicle meter interface according to the present invention, the first system and the second system are activated, and the startup animation data of the in-vehicle meter is imported into the memory of the first system, the startup animation data in the memory of the first system is input into the image synthesis controller in the first system, and it determines whether the first system receives the startup animation data from the second system, if not, the vehicle body data and the startup animation data of the first system are merged through the image synthesis controller to obtain the merged data, and the merged data is input into the display controller of the first system, and is displayed on the in-vehicle meter interface through the display controller. This embodiment does not adopt the solution that is based on the virtual machine hypervisor-> the bootloader -> the kernel startup-> the interface application (App), the display speed of the in-vehicle meter interface is significantly improved, so that the in-vehicle meter interface can be normally displayed within 1 second, for example, within 300-500 milliseconds, and the vehicle body data of the vehicle where the meter is located can be truly and completely displayed, thereby improving the user experience.

In an embodiment of the present invention, the displaying method further includes:
if the first system receives the startup animation data from the second system, merging the startup animation data of the second system and the vehicle body data through the image synthesis controller to obtain merged data, and inputting it into the display controller of the first system; and
stopping inputting the startup animation data in the memory of the first system into the image synthesis controller in the first system.

In this embodiment, the startup duration of the first system is shorter than that of the second system, and the stability of the second system is stronger. If the first system receives the startup animation data from the second system, the startup animation data of the second system and the vehicle body data are merged by the image synthesis controller to obtain the merged data, and the merged data is input to the display controller of the first system, thereby improving the stability. It can be understood that, since the startup duration of the first system is shorter than that of the second system, the present solution will first merge the vehicle body data and the startup animation data of the first system through the image synthesis controller to obtain the merged data, and input it to the display controller of the first system. When the first system receives the startup animation data from the second system, after merging the startup animation data of the second system and the vehicle body data through the image synthesis controller to obtain the merged data, and inputting the merged data to the display controller of the first system, and it is no longer necessary to input the startup animation data in the memory of the first system to the image synthesis controller of the first system, so that the startup animation data in the memory of the first system may be stopped from being inputted into the image synthesis controller of the first system, that is to say, the switching of the startup animation data has been achieved.

In an embodiment of the present invention, the importing the startup animation data of the in-vehicle meter into the memory of the first system may include:
importing the startup animation data stored in a universal flash storage (UFS) into the memory of the first system.

In this embodiment, it consumes very little time to import the startup animation data stored in the universal flash storage to the memory of the first system, which can further improves the display speed of the in-vehicle meter interface. Both the UFS and the double data rate synchronous dynamic random access memory may be initialized through the heterogeneous system on chip.

In an embodiment of the present invention, the inputting the startup animation data in the memory of the first system into the image synthesis controller in the first system may include:
decoding the startup animation data into animation data in a specified format through a video processing unit (VPU), and inputting the animation data in the specified format into the image synthesis controller in the first system.

In this embodiment, the specified format may be a DPI (Dots Per Inch) format. It is beneficial for playing the startup animation data and merging it with the vehicle body data by decoding the startup animation data into the animation data in the specified format through the video processing unit, and inputting the animation data in the specified format into the image synthesis controller in the first system.

In an embodiment of the present invention, the second system may be activated through the following methods:
activating a bootloader in the second system;
initializing a graphics processing unit (GPU) in the second system through the bootloader;
displaying a first frame of meter image of the in-vehicle meter interface through the graphics processing unit in the second system; and
sending the startup animation data to the first system.

In this embodiment, when the graphics processing unit in the second system displays the first frame of meter image of the in-vehicle meter interface, it indicates that the display function of the in-vehicle meter interface in the second system has completed the preparation operation. The activating manner of the second system enables the second system to run more stably, and the format of the startup animation data sent to the first system may also be a format specified in the above embodiments, such as the DPI format. In addition, data processing units (DPU) in the second system may also be initialized through the bootloader. The DPU mainly undertake the acceleration processing of security, network, storage, and AI services, so as to reduce a utilization rate of a central processing unit (CPU) and satisfy network-dedicated calculation requirements, and is especially suitable for a scenario in which the number of servers is large and a data transmission rate is strictly required.

In an embodiment of the present invention, the first system may be a functional safety operating system (Functional-safety OS); and
the second system may be a Linux operating system.

In this embodiment, the first system is the functional safety operating system that can be quickly started, and the second system is the Linux operating system that runs very stably. Therefore, the solution of this embodiment can enable the in-vehicle meter interface to have the advantages of fast and stable display. In general, the Linux operating system may run in an ARM CortexA55x2, and the functional safety operating system may run in an ARM CortexR52.

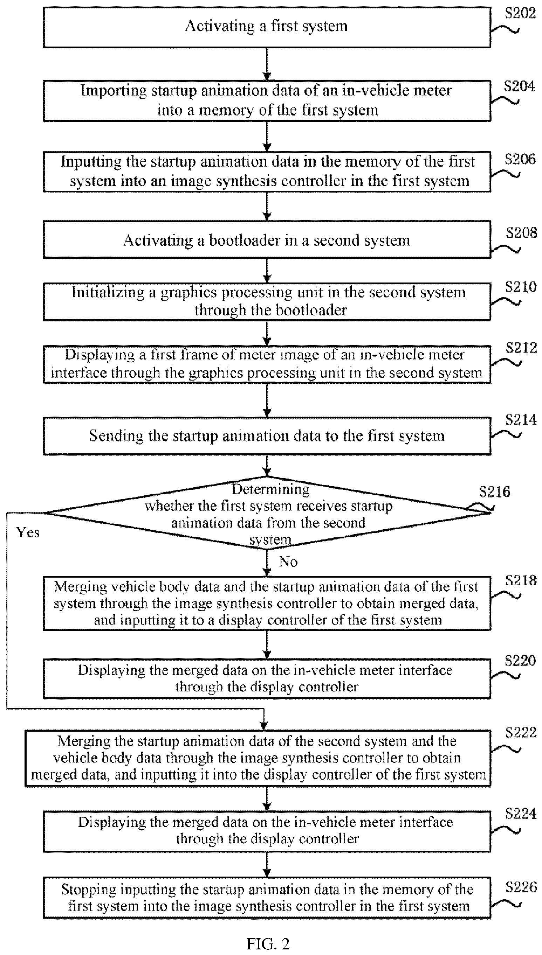

FIG. 2 is a flowchart of a displaying method for an in-vehicle meter interface according to another embodiment of the present invention. Referring to Fig. 2, the displaying method may include the following steps:
Step S202: activating a first system.
Step S204: importing startup animation data of an in-vehicle meter into a memory of the first system.
Step S206: inputting the startup animation data in the memory of the first system into an image synthesis controller in the first system.
Step S208: activating a bootloader in a second system.
Step S210: initializing a graphics processing unit in the second system through the bootloader.
Step S212: displaying a first frame of meter image of the in-vehicle meter interface through the graphics processing unit in the second system.
Step S214: sending the startup animation data to the first system.
Step S216: determining whether the first system receives startup animation data from the second system.

If not, proceeding to step S218; and if yes, proceeding to step S222.

Step S218: merging vehicle body data and the startup animation data of the first system through the image synthesis controller to obtain merged data, and inputting it to a display controller of the first system.

Step S220: displaying the merged data on the in-vehicle meter interface through the display controller.

Step S222: merging the startup animation data of the second system and the vehicle body data through the image synthesis controller to obtain merged data, and inputting it into the display controller of the first system.

Step S224: displaying the merged data on the in-vehicle meter interface through the display controller.

Step S226: stopping inputting the startup animation data in the memory of the first system into the image synthesis controller in the first system.

In this embodiment, step S202 and step S208 may be performed at the same time without a strict order, that is to say, the first system and the second system may be activated at the same time, and the difference therebetween lies in that a startup duration of the first system is shorter than that of the second system.

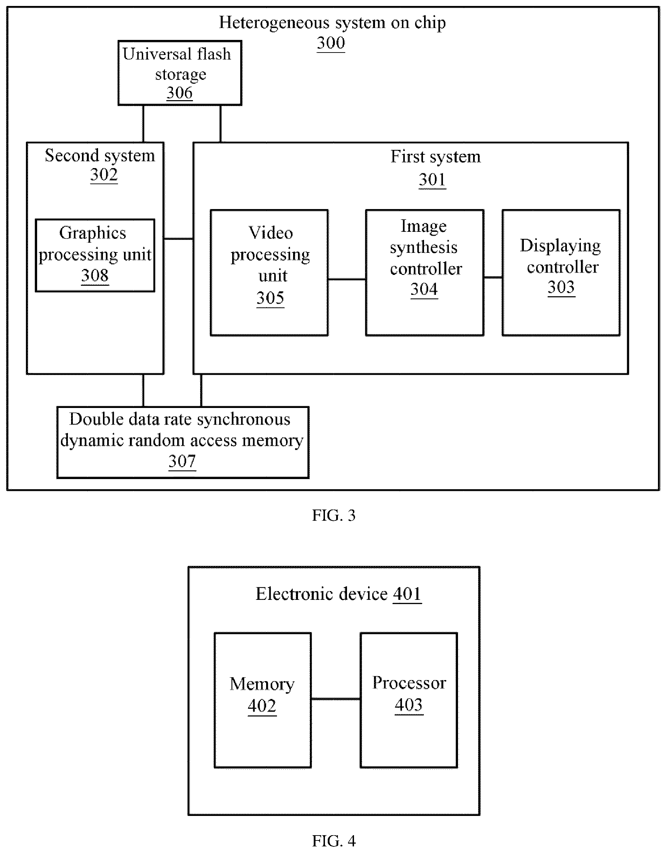

FIG. 3 is a schematic block diagram of a display system according to an embodiment of the present invention. Based on the same concept, the present invention further provides a displaying system for an in-vehicle meter interface. The display system may include a heterogeneous system on chip 300, where the heterogeneous system on chip 300 includes at least two heterogeneous kernels running a first system 301 and a second system 302, respectively. The first system 301 is configured to import startup animation data of the in-vehicle meter into a memory of the first system 301, input the startup animation data in the memory of the first system 301 into an image synthesis controller 304 in the first system, determine whether the first system 301 receives startup animation data from the second system 302, merge the vehicle body and the startup animation data of the first system 301 through the image synthesis controller 304 if the first system 301 does not receive the startup animation data from the second system 302 to obtain merged data, and input it to a display controller 303 of the first system 301, and display the merged data on the in-vehicle meter interface through the display controller 303, where a startup duration of the first system 301 is shorter than that of the second system 302.

In this embodiment, it can be understood that the heterogeneous system on chip 300 can be connected to a display screen of the meter. This embodiment obviously improves the display speed of the in-vehicle meter interface, so that the in-vehicle meter interface can be normally displayed within 1 second, for example, within 300-500 milliseconds, and the vehicle body data of the vehicle where the meter is located can be truly and completely reflected, thereby improving the user experience. The type of the memory may be a double data rate synchronous dynamic random access memory 307.

In an embodiment of the present invention, if receiving the startup animation data from the second system 302, the first system 301 is configured to merge the startup animation data of the second system 302 and the vehicle body data through the image synthesis controller 304, to obtain the merged data, input it into the display controller 303 of the first system 301, and stop inputting the startup animation data in the memory of the first system 301 into the image synthesis controller 304 in the first system 301. The startup animation data in the memory of the first system 301 is stopped from being input into the image synthesis controller 304 of the first system 301, that is, a channel of the video processing unit 305 is closed. When receiving the startup animation data from the second system 302, the first system 301 opens a channel of the graphics processing unit 308.

In an embodiment of the present invention, the first system 301 is configured to import the startup animation data stored in a universal flash storage 306 into the memory of the first system 301.

In an embodiment of the present invention, the second system 302 is configured to send the startup animation data to the first system 301.

In an embodiment of the present invention, the first system 301 is configured to decode the startup animation data into animation data in a specified format through the video processing unit 305, and input the animation data in the specified format into the image synthesis controller 304 in the first system 301.

In an embodiment of the present invention, the second system 302 may be activated through the following methods:
activating a bootloader in the second system 302;
initializing a graphics processing unit 308 in the second system 302 through the bootloader;
displaying a first frame of meter image of the in-vehicle meter interface through the graphics processing unit 308 in the second system 302; and
sending the startup animation data to the first system 301.

FIG. 4 is a schematic block diagram of an electronic device according to an embodiment of the present invention. Based on the same concept, the present invention further provides an electronic device 401, including a memory 402 and a processor 403, where the memory 402 stores a control program which, when executed by the processor 403, is used to implement the displaying method for an in-vehicle meter interface according to any one of the above-described embodiments.

Based on the same concept, the present invention further provides a machine-readable storage medium, storing a machine-executable program thereon which, when executed by a processor, implements the displaying method for an in-vehicle meter interface according to any one of the above-described embodiments.

The above-described embodiments may be combined randomly. According to any one of the above-described preferred embodiments or a combination of a plurality of the above-described preferred embodiments, the embodiments of the present invention can achieve the following beneficial effects.

In the displaying method for an in-vehicle meter interface according to the present invention, the first system and the second system are activated, and the startup animation data of the in-vehicle meter is imported into the memory of the first system, the startup animation data in the memory of the first system is input into the image synthesis controller in the first system, and it determines whether the first system receives the startup animation data from the second system, if not, the vehicle body data and the startup animation data of the first system are merged through the image synthesis controller to obtain the merged data, and the merged data is input into the display controller of the first system, and is displayed on the in-vehicle meter interface through the display controller. This embodiment does not adopt the solution that is based on the virtual machine hypervisor-> the bootloader -> the kernel startup-> the interface application (App), the display speed of the in-vehicle meter interface is significantly improved, so that the in-vehicle meter interface can be normally displayed within 1 second, for example, within 300-500 milliseconds, and the vehicle body data of the vehicle where the meter is located can be truly and completely displayed, thereby improving the user experience.

At this point, those skilled in the art should recognize that although a plurality of exemplary embodiments of the present invention have been shown and described in detail herein, many other variations or modifications consistent with the principle of the present invention may be determined or derived directly from the disclosed content of the present invention without departing from the scope of the present invention. Accordingly, the scope of the present invention should be understood and assumed as covering all such other variations or modifications.

## Claims

1. A displaying method for an in-vehicle meter interface, applied to a heterogeneous system on chip which comprises at least two heterogeneous kernels running a first system and a second system, respectively, and the displaying method comprising:
activating (S102) the first system and the second system;
importing (S104) startup animation data of an in-vehicle meter into a memory of the first system;
inputting (S106) the startup animation data in the memory of the first system (301) into an image synthesis controller in the first system;
determining (S108) whether the first system receives startup animation data from the second system;
if the first system does not receive the startup animation data from the second system, merging (S110) vehicle body data and the startup animation data of the first system through the image synthesis controller to obtain merged data, and inputting the merged data to a display controller of the first system;
displaying (S112) the merged data on the in-vehicle meter interface through the display controller;
wherein a startup duration of the first system is shorter than a startup duration of the second system;
the displaying method further comprises:
if the first system receives the startup animation data from the second system, merging (S222) the startup animation data of the second system and the vehicle body data through the image synthesis controller to obtain merged data, and inputting the merged data into the display controller of the first system;
stopping (S226) inputting the startup animation data in the memory of the first system into the image synthesis controller in the first system;
wherein the importing (S104) the startup animation data of the in-vehicle meter into the memory of the first system, comprising:
importing the startup animation data stored in a universal flash storage into the memory of the first system.

2. The displaying method according to claim 1, wherein
the inputting (S106) the startup animation data in the memory of the first system into the image synthesis controller in the first system, comprising:
decoding the startup animation data into animation data in a specified format through a video processing unit, and inputting the animation data in the specified format into the image synthesis controller in the first system.

3. The displaying method according to claim 1, wherein
the second system is activated through the following methods:
activating (S208) a bootloader in the second system;
initializing (S210) a graphics processing unit in the second system through the bootloader;
displaying (S212) a first frame of meter image of the in-vehicle meter interface through the graphics processing unit in the second system;
sending (S214) the startup animation data to the first system.

4. The displaying method according to claim 1, wherein
the first system is a functional safety operating system;
the second system is a Linux operating system.

5. A displaying system for an in-vehicle meter interface, comprising a heterogeneous system on chip (300) which comprises at least two heterogeneous kernels running a first system (301) and a second system (302), respectively, wherein
the first system (301) is configured to:
import startup animation data of an in-vehicle meter into a memory of the first system (301);
input the startup animation data in the memory of the first system (301) into an image synthesis controller (304) in the first system (301);
determine whether the first system (301) receives startup animation data from the second system (302);
if the first system (301) does not receive the startup animation data from the second system (302), merge vehicle body data and the startup animation data of the first system (301) through the image synthesis controller (304) to obtain merged data, and input the merged data to a display controller (303) of the first system (301);
display the merged data on the in-vehicle meter interface through the display controller (303);
wherein a startup duration of the first system (301) is shorter than a startup duration of the second system (302);
the first system (301) is configured to:
merge the startup animation data of the second system (302) and the vehicle body data through the image synthesis controller (304) to obtain merged data if the first system (301) receives the startup animation data from the second system (302), and input the merged data into the display controller (303) of the first system (301);
stop inputting the startup animation data in the memory of the first system (301) into the image synthesis controller (304) in the first system (301);
wherein when importing the startup animation data of the in-vehicle meter into the memory of the first system (301), the first system (301) is specifically configured to:
import the startup animation data stored in a universal flash storage (306) into the memory of the first system (301).

6. The displaying system according to claim 5, wherein when inputting the startup animation data in the memory of the first system (301) into the image synthesis controller (304) in the first system (301), the first system (301) is specifically configured to:
decode the startup animation data into animation data in a specified format through a video processing unit (304), and input the animation data in the specified format into the image synthesis controller (304) in the first system (301).

7. The displaying system according to claim 5, wherein
the second system (302) is activated through the following methods:
activating a bootloader in the second system (302);
initializing a graphics processing unit (308) in the second system (302) through the bootloader;
displaying a first frame of meter image of the in-vehicle meter interface through the graphics processing unit (308) in the second system (302);
sending the startup animation data to the first system (301).

8. The displaying system according to claim 5, wherein
the first system (301) is a functional safety operating system;
the second system (302) is a Linux operating system.

9. A machine-readable storage medium, storing a machine-executable program thereon which, when executed by a processor (403), implements the displaying method for an in-vehicle meter interface according to any one of claims 1-4.

## Patentansprüche

1. Anzeigeverfahren für eine Fahrzeuginstrumentenschnittstelle, angewendet auf ein heterogenes System-on-Chip, das mindestens zwei heterogene Kerne umfasst, die jeweils ein erstes System und ein zweites System ausführen, wobei das Anzeigeverfahren Folgendes umfasst:
Aktivieren (S102) des ersten Systems und des zweiten Systems;
Importieren (S104) von Startanimationsdaten eines Fahrzeuginstruments in einen Speicher des ersten Systems;
Eingeben (S106) der Startanimationsdaten im Speicher des ersten Systems (301) in eine Bildsynthese-Steuerung im ersten System;
Bestimmen (S108), ob das erste System Startanimationsdaten vom zweiten System empfängt;
wenn das erste System die Startanimationsdaten vom zweiten System nicht empfängt, Zusammenführen (S110) der Fahrzeugkarosseriedaten und der Startanimationsdaten des ersten Systems durch die Bildsynthese-Steuerung, um zusammengeführte Daten zu erhalten, und Eingeben der zusammengeführten Daten in eine Anzeige-Steuerung des ersten Systems;
Anzeigen (S112) der zusammengeführten Daten auf der Fahrzeuginstrumentenschnittstelle über die Anzeige-Steuerung;
wobei eine Startdauer des ersten Systems kürzer ist als eine Startdauer des zweiten Systems;
wobei das Verfahren weiter Folgendes umfasst:
wenn das erste System die Startanimationsdaten vom zweiten System empfängt, Zusammenführen (S222) der Startanimationsdaten des zweiten Systems und der Fahrzeugkarosseriedaten durch die Bildsynthese-Steuerung, um zusammengeführte Daten zu erhalten, und Eingeben der zusammengeführten Daten in die Anzeige-Steuerung des ersten Systems;
Stoppen (S226) der Eingabe der Startanimationsdaten aus dem Speicher des ersten Systems in die Bildsynthese-Steuerung des ersten Systems;
wobei das Importieren (S104) der Startanimationsdaten des Fahrzeuginstruments in den Speicher des ersten Systems Folgendes umfasst:
Importieren der in einem universellen Flash-Speicher gespeicherten Startanimationsdaten in den Speicher des ersten Systems.

2. Anzeigeverfahren nach Anspruch 1, wobei
Eingeben (S106) der Startanimationsdaten aus dem Speicher des ersten Systems in die Bildsynthese-Steuerung des ersten Systems Folgendes umfasst:
Dekodieren der Startanimationsdaten in Animationsdaten in einem angegebenen Format durch eine Videoverarbeitungseinheit, und Eingeben der Animationsdaten im angegebenen Format in die Bildsynthese-Steuerung im ersten System.

3. Anzeigeverfahren nach Anspruch 1, wobei
das zweite System durch die folgenden Verfahren aktiviert wird:
Aktivieren (S208) eines Bootloaders im zweiten System;
Initialisieren (S210) einer Grafikverarbeitungseinheit im zweiten System über den Bootloader;
Anzeigen (S212) eines ersten Instrumenten-Bildrahmens der Fahrzeuginstrumentenschnittstelle über die Grafikverarbeitungseinheit im zweiten System;
Senden (S214) der Startanimationsdaten an das erste System.

4. Anzeigeverfahren nach Anspruch 1, wobei
das erste System ein Betriebssystem für funktionale Sicherheit ist;
das zweite System ein Linux-Betriebssystem ist.

5. Anzeigesystem für eine Fahrzeuginstrumentenschnittstelle, das ein heterogenes System-on-Chip (300) umfasst, welches mindestens zwei heterogene Kerne umfasst, die jeweils ein erstes System (301) und ein zweites System (302) ausführen, wobei
das erste System (301) zu Folgendem ausgebildet ist:
Importieren von Startanimationsdaten eines Fahrzeuginstruments in einen Speicher des ersten Systems (301);
Eingeben der Startanimationsdaten im Speicher des ersten Systems (301) in eine Bildsynthese-Steuerung (304) im ersten System (301);
Bestimmen, ob das erste System (301) Startanimationsdaten vom zweiten System (302) empfängt;
wenn das erste System (301) die Startanimationsdaten vom zweiten System (302) nicht empfängt, Zusammenführen der Fahrzeugkarosseriedaten und der Startanimationsdaten des ersten Systems (301) durch die Bildsynthese-Steuerung (304), um zusammengeführte Daten zu erhalten, und Eingeben der zusammengeführten Daten an eine Anzeige-Steuerung (303) des ersten Systems (301);
Anzeigen der zusammengeführten Daten über die Anzeige-Steuerung (303) auf der Fahrzeuginstrumentenschnittstelle;
wobei eine Startdauer des ersten Systems (301) kürzer ist als eine Startdauer des zweiten Systems (302);
das erste System (301) zu Folgendem ausgebildet ist:
Zusammenführen der Startanimationsdaten des zweiten Systems (302) und der Fahrzeugkarosseriedaten über die Bildsynthese-Steuerung (304), um zusammengeführte Daten zu erhalten, wenn das erste System (301) die Startanimationsdaten vom zweiten System (302) empfängt, und Eingeben der zusammengeführten Daten in die Anzeige-Steuerung (303) des ersten Systems (301);
Stoppen der Eingabe der Startanimationsdaten im Speicher des ersten Systems (301) in die Bildsynthese-Steuerung (304) im ersten System (301);
wobei beim Importieren der Startanimationsdaten des Fahrzeuginstruments in den Speicher des ersten Systems (301) das erste System (301) insbesondere zu Folgendem ausgebildet ist:
Importieren der in einem universellen Flash-Speicher (306) gespeicherten Startanimationsdaten in den Speicher des ersten Systems (301).

6. Anzeigesystem nach Anspruch 5, wobei beim Eingeben der Startanimationsdaten im Speicher des ersten Systems (301) in die Bildsynthese-Steuerung (304) im ersten System (301) das erste System (301) insbesondere zu Folgendem ausgebildet ist:
Dekodieren der Startanimationsdaten in Animationsdaten in einem angegebenen Format durch eine Videoverarbeitungseinheit (304), und Eingeben der Animationsdaten im angegebenen Format in die Bildsynthese-Steuerung (304) im ersten System (301).

7. Anzeigesystem nach Anspruch 5, wobei
das zweite System (302) durch die folgenden Verfahren aktiviert wird:
Aktivieren eines Bootloaders im zweiten System (302);
Initialisieren einer Grafikverarbeitungseinheit (308) im zweiten System (302) über den Bootloader;
Anzeigen eines ersten Instrumenten-Bildrahmens der Fahrzeuginstrumentenschnittstelle über die Grafikverarbeitungseinheit (308) im zweiten System (302);
Senden der Startanimationsdaten an das erste System (301).

8. Anzeigesystem nach Anspruch 5, wobei
das erste System (301) ein Betriebssystem für funktionale Sicherheit ist;
das zweite System (302) ein Linux-Betriebssystem ist.

9. Maschinenlesbares Speichermedium, das darauf ein maschinenlesbares Programm speichert, welches bei Ausführung durch einen Prozessor (403) das Anzeigeverfahren für eine Fahrzeuginstrumentenschnittstelle nach einem der Ansprüche 1 bis 4 implementiert.

## Revendications

1. Procédé d'affichage pour une interface de compteur embarqué, appliqué à un système hétérogène sur puce qui comporte au moins deux noyaux hétérogènes exécutant respectivement un premier système et un deuxième système, et le procédé d'affichage comportant :
l'activation (S102) du premier système et du deuxième système ;
l'importation (S104) de données d'animation de démarrage d'un compteur embarqué dans une mémoire du premier système ;
l'entrée (S106) des données d'animation de démarrage dans la mémoire du premier système (301) dans un contrôleur de synthèse d'images dans le premier système ;
la détermination (S108) si le premier système reçoit des données d'animation de démarrage du deuxième système ;
si le premier système ne reçoit pas les données d'animation de démarrage du deuxième système, la fusion (S110) de données de carrosserie de véhicule et des données d'animation de démarrage du premier système via le contrôleur de synthèse d'images pour obtenir des données fusionnées, et l'entrée des données fusionnées dans un contrôleur d'affichage du premier système ;
l'affichage (S112) des données fusionnées sur l'interface de compteur embarqué via le contrôleur d'affichage ;
dans lequel une durée de démarrage du premier système est plus courte qu'une durée de démarrage du deuxième système ;
le procédé d'affichage comporte en outre :
si le premier système reçoit les données d'animation de démarrage du deuxième système, la fusion (S222) des données d'animation de démarrage du deuxième système et des données de carrosserie de véhicule via le contrôleur de synthèse d'images pour obtenir des données fusionnées, et l'entrée des données fusionnées dans le contrôleur d'affichage du premier système ;
l'arrêt (S226) de l'entrée des données d'animation de démarrage dans la mémoire du premier système dans le contrôleur de synthèse d'images dans le premier système ;
dans lequel l'importation (S104) des données d'animation de démarrage du compteur embarqué dans la mémoire du premier système comporte :
l'importation des données d'animation de démarrage stockées dans un stockage flash universel dans la mémoire du premier système.

2. Procédé d'affichage selon la revendication 1, dans lequel
l'entrée (S106) des données d'animation de démarrage dans la mémoire du premier système dans le contrôleur de synthèse d'images dans le premier système comporte :
le décodage des données d'animation de démarrage en données d'animation dans un format spécifié via une unité de traitement vidéo, et l'entrée des données d'animation dans le format spécifié dans le contrôleur de synthèse d'images dans le premier système.

3. Procédé d'affichage selon la revendication 1, dans lequel
le deuxième système est activé par les procédés suivants :
l'activation (S208) d'un chargeur d'amorçage dans le deuxième système ;
l'initialisation (S210) d'une unité de traitement graphique dans le deuxième système via le chargeur d'amorçage ;
l'affichage (S212) d'une première trame d'image de compteur de l'interface de compteur embarqué via l'unité de traitement graphique dans le deuxième système ;
l'envoi (S214) des données d'animation de démarrage au premier système.

4. Procédé d'affichage selon la revendication 1, dans lequel
le premier système est un système d'exploitation de sécurité fonctionnelle ;
le deuxième système est un système d'exploitation Linux.

5. Système d'affichage pour une interface de compteur embarqué, comportant un système hétérogène sur puce (300) qui comporte au moins deux noyaux hétérogènes exécutant respectivement un premier système (301) et un deuxième système (302), dans lequel
le premier système (301) est configuré pour :
importer des données d'animation de démarrage d'un compteur embarqué dans une mémoire du premier système (301) ;
entrer les données d'animation de démarrage dans la mémoire du premier système (301) dans un contrôleur de synthèse d'images (304) dans le premier système (301) ;
déterminer si le premier système (301) reçoit des données d'animation de démarrage du deuxième système (302) ;
si le premier système (301) ne reçoit pas les données d'animation de démarrage du deuxième système (302), fusionner les données de carrosserie de véhicule et les données d'animation de démarrage du premier système (301) via le contrôleur de synthèse d'images (304) pour obtenir des données fusionnées, et entrer les données fusionnées dans un contrôleur d'affichage (303) du premier système (301) ;
afficher les données fusionnées sur l'interface de compteur embarqué via le contrôleur d'affichage (303) ;
dans lequel une durée de démarrage du premier système (301) est plus courte qu'une durée de démarrage du deuxième système (302) ;
le premier système (301) est configuré pour :
fusionner les données d'animation de démarrage du deuxième système (302) et les données de carrosserie de véhicule via le contrôleur de synthèse d'image (304) pour obtenir des données fusionnées si le premier système (301) reçoit les données d'animation de démarrage du deuxième système (302), et entrer les données fusionnées dans le contrôleur d'affichage (303) du premier système (301) ;
arrêter l'entrée des données d'animation de démarrage dans la mémoire du premier système (301) dans le contrôleur de synthèse d'images (304) dans le premier système (301) ;
dans lequel, lors de l'importation des données d'animation de démarrage du compteur embarqué dans la mémoire du premier système (301), le premier système (301) est spécifiquement configuré pour :
importer les données d'animation de démarrage stockées dans un stockage flash universel (306) dans la mémoire du premier système (301).

6. Système d'affichage selon la revendication 5, dans lequel, lors de l'entrée des données d'animation de démarrage dans la mémoire du premier système (301) dans le contrôleur de synthèse d'images (304) dans le premier système (301), le premier système (301) est spécifiquement configuré pour :
décoder les données d'animation de démarrage en données d'animation dans un format spécifié via une unité de traitement vidéo (304), et entrer les données d'animation dans le format spécifié dans le contrôleur de synthèse d'images (304) dans le premier système (301).

7. Système d'affichage selon la revendication 5, dans lequel
le deuxième système (302) est activé par les procédés suivants :
l'activation d'un chargeur d'amorçage dans le deuxième système (302) ;
l'initialisation d'une unité de traitement graphique (308) dans le deuxième système (302) via le chargeur d'amorçage ;
l'affichage d'une première trame d'image de compteur de l'interface de compteur embarqué via l'unité de traitement graphique (308) dans le deuxième système (302) ;
l'envoi des données d'animation de démarrage au premier système (301).

8. Système d'affichage selon la revendication 5, dans lequel
le premier système (301) est un système d'exploitation de sécurité fonctionnelle ;
le deuxième système (302) est un système d'exploitation Linux.

9. Support de stockage lisible par machine, stockant sur celui-ci un programme exécutable par machine qui, lorsqu'il est exécuté par un processeur (403), met en œuvre le procédé d'affichage pour une interface de compteur embarqué selon l'une quelconque des revendications 1 à 4.
